# EUROPEAN PATENT APPLICATION

(11) **EP 3 435 587 A1**
(43) Date of publication of application: **30.01.2019**
(21) Application number: 17182761.1
(22) Date of filing: 24.07.2017
(51) Int. Cl.: H04L 9/32, H04B 10/116, H04L 9/08

(54) **VISIBLE LIGHT COMMUNICATION, VLC, NETWORK AND A METHOD**

(71) Applicant: Deutsche Telekom AG, 53113 Bonn (DE)
(72) Inventor: BUNGE, Christian-Alexander, Prof., 14532 Kleinmachnow (DE); NOLAN, Julian Charles, 1009 Pully (CH); LAWRENSON, Matthew John, 1030 Bussigny (CH)
(74) Representative: Vossius & Partner Patentanwälte Rechtsanwälte mbB

(57) **Abstract**

A physically unclonable function is a function that identifies a device by means of the device's intrinsic random features. A diffractive filter array is a device designed for colour imaging, whose design depends up9on a random microstructure within the diffractive part of the receiver. The invention uses a diffractive filter array as a physically unclonable function within a visible light communication network, so as to authenticate the individual nodes in the network and detect tampering within the individual nodes and communication links. That information is exchanged across the network, so that the network reaches a consensus decision about which nodes and links are to be trusted, and the network uses that information for communication and routing.

## Description

### Field of the invention

The invention relates to a Visible Light Communications, VLC, network and to a method for use in at least one VLC link and at least two VLC nodes.

### Background

A physically unclonable function, PUF, is a function that identifies a device by means of the device's intrinsic random features. A PUF receives a challenge from another device, and returns a response that depends both upon the challenge and upon those intrinsic random features. Together, the challenge and response are known as a challenge response pair, CRP.

The PUF is used in two phases. In the first phase, known as enrolment, a number of CRPs are gathered from a particular PUF, and are stored in a CRP database. In the second phase, know as verification, a challenge from the CRP database is applied to the PUF, and the response is compared with the expected response from the database. Ideally, the response is accepted if it is identical with the expected response and is rejected otherwise. In practice, the response is subject to noise, and is accepted if it is sufficiently close to the expected response.

Desirable properties of PUFs include the following: it should be easy to evaluate the response; the response should uniquely identify the device being challenged; the response should be reproducible, and only subject to small errors due to noise; it should be difficult to clone a device; it should be difficult to predict the response to a particular challenge by observing only a small set of CRPs; it should be difficult to reconstruct the challenge from knowledge of the PUF and the response; and any modifications to the PUF should be evident by observing changes in the responses. In practice, not all of these properties are realized in practical implementations, with the last two being the least common.

Several implementations of PUFs have been proposed. As an example, an optical PUF is typically manufactured using a random optical microstructure. It is illuminated by laser, scatters the light, and transmits a laser speckle pattern. The challenge is varied by adjusting the relative orientation of the laser and the optical PUF, and the response is calculated by applying a hash function to the speckle pattern. Small changes in orientation result in a completely different response, as desired. Other implementations include PUFs based on paper, RF components, magnetic media, acoustic delay lines, analogue electronic components, and digital race conditions. The possible applications of PUFs include anti-counterfeiting, secure generation and exchange of secret keys, and cryptography that directly uses the intrinsic properties of the PUF.

In a visible light communication, VLC, device light of one or more wavelengths is collected by a receiver at a particular angle on the receiver. If the receiver is able to generate a unique and non-copyable function of both the properties of the received light and the properties of the receiver, then it is possible to construct a PUF to validate the authenticity of the VLC network. One means of achieving this is to use a device which uses the behavior of the incoming light, and its optical interactions with a device, including: diffraction, interference, refraction, reflection.

By altering certain properties of the receiver these patterns can be altered. Such properties might be distances between elements of the receiver or offsets laterally or vertically between different optical elements or sensor arrays. Finally, the device should operate in a manner that small changes in the structure of the device, such as changes inevitably introduced during manufacture even in high precision manufacture, or changes that could be introduced using some kind of added manufacturing noise, would alter the signatures the device produces.

One such component choice is discussed here, Diffractive Filter Arrays, but other combinations of diffraction and light interference, interference with reference beams and so on, can be equally considered. Components which have these properties, form a readable signature varied by: incoming light spectra and light direction; some internally variable and controllable parameter of the device; or individual structure variations smaller than manufacturing tolerance or introduced by random manufacturing processes, can then be combined with a photodiode to form a device that can be termed Unclonable Signature Devices, USD.

In conventional color imaging a Bayer filter is often used to allow the image sensor to capture color information. A Bayer filter is an arrangement whereby each sensor pixel typically comprises four subpixels, each with an absorbing color filter, one red, one blue and two green. Each subpixel only receivers one-half or one-quarter of the available light, which results in a loss of performance in low light conditions.

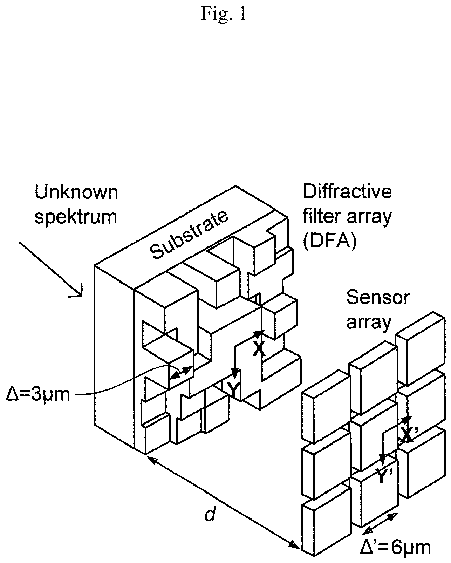

A diffractive filter array, DFA, operates as shown in FIG. 1. Light illuminates a unit cell of the diffractive filter array. This is made of a small array of squares, each with a randomly chosen height. The array diffracts light onto a pixel within the spatial sensor array, which lies a distance d away. In turn, the spatial pixel comprises a small array of sensor pixels, which measure the amount of illumination. Finally, the sensor pixels are combined into a repeating array. The light intensity distribution across the sensor pixel array depends on the distance d and the wavelength λ, as well as the orientation of the incoming light.

For colour imaging, the sensor array is illuminated by the desired light source. The light intensity distribution within each sensor pixel is measured and inverted, so as to recover the colour of the incoming radiation. Incoming light which has a number of different sources (different wavelengths, different source angles) will form patterns which depend on the phase relationships of the different light sources which most sensors are unable to recover, but will continue to form a set of patterns which depend solely on those sources and the internal settings (diffractive surface to sensor distance) of the device.

A USD therefore contains a DFA and is a combination of a diffractive optical element, whose microstructure contains the unclonable variations, and a sensor array, which measures the distribution of light from diffractive elements, and which can be used to additional purposes, e.g. measuring temporal modulation of the light.

### Technical problem

It may be desirable to use a PUF not only to authenticate a device (for example at the time it is selected to be set up as part of a VLC network), but also to guard against any subsequent tampering with a VLC link. Such tampering would be expected to disturb the properties of the received signal, such as its orientation. However, some variations occur naturally during the operation of the network, without tampering, such as due to changes in atmospheric humidity or temperature, and any detection of tampering must be able to differentiate such natural variations from actual tampering.

A DFA contains a random microstructure that suggests its use as a USD PUF. As well as deliberated variations between devices, random variations due to manufacturing tolerances are desirable for the use of a DFA as a USD PUF, particularly by supporting the property of unclonability. However other technologically similar solutions, for example devices which use the interference of multiple light fields derived from the light source, or with an internal reference light, can be similarly used.

If a conventional optical PUF were used in such a system, then it would be a separate component from the VLC transceiver and operate in parallel to it. A USD which contains an appropriate light sensing capability, such as a DFA and a sensor array, can be used as the receiver itself, thereby duplicating functionality and minimizing the cost of the system and further reducing the ability to tamper with the system.

The object of the invention is to provide a Visible Light Communications, VLC, network comprising at least one VLC link and at least two VLC nodes adapted to communicate through the at least one VLC link, and a method therefor, taking into account the above aforementioned problems.

### Summary of the invention

This object is achieved with the features of the independent claims.

A Visible Light Communications, VLC, network according to the invention comprises at least one VLC link and at least two VLC nodes which are adapted to communicate through the at least one VLC link. Each of the VLC nodes contains physically unclonable functions, PUFs, that are constructed using an optical Unclonable Signature Device, USD. Further, each of the VLC nodes comprises at least one VLC transceiver comprising one transmitting part and one receiving part. One of the VLC nodes, further referred as first VLC node, is configured to challenge a different VLC node, further referred as second VLC node, both being in direct communication, and receive a response in reply therefor. The first VLC node is configured to inspect the response and estimate the likelihood of tampering within the second VLC node or the intervening VLC link, and to exchange said estimation information across the network to consensually determine the VLC nodes and VLC links that are to be trusted, wherein the estimation information is used in communication and routing across the network.

Each of the VLC links may be a communication link across which two of the VLC transceivers communicate by means of a modulated optical carrier.

Each of the USDs may be associated with one of the VLC transceivers.

The PUFs may be implemented by the USDs by means of variations in the microstructure of components of the individual USDs, and wherein said variations are introduced by means of either or both of variations deliberately introduced during manufacturing or random variations due to manufacturing tolerances.

The VLC network may further comprise means for measuring the likelihood of tampering within either or both of one VLC link and the corresponding DFA PUF, which is determined by the VLC node that issued the challenge.

The optical USD may be a Diffractive Filter Array, DFA, each DFA comprising a diffractive part and a sensor part separated by an adjustable distance d.

The challenge may comprise a message sent by a VLC transmitter across a VLC link to a USD PUF is configured to define one or both of a wavelength λ, by means of the wavelength/s or color of the optical carrier, and/or the internal variable parameter setting of the USD PUF, the information being sent within the message.

The VLC network may further comprise a challenge response database, CRP database, comprising a set of challenges, a set of expected responses, and an indication of the expected variability amongst the responses.

The VLC network may further comprise a node level tampering algorithm, which is configured to take at least one CRP pair and the contents of the CRP database, and to determine the node level tampering likelihood, wherein the node level tampering algorithm has means to differentiate between natural variations in communication links and variations most likely to be due to tampering.

The VLC network may further comprise an integrity protection algorithm configured to check that the information has not been modified on the pathway between one VLC node and another VLC node.

The VLC network may further comprise means for measuring the likelihood of tampering within each individual VLC node and its associated VLC links.

The VLC network may further comprise a trust database containing a list of which VLC links and VLC nodes are trusted, a trust database algorithm configured to take the Network Level Tampering Likelihood and update the trust database, and a communicating and routing algorithm configured to take the contents of the trust database and to determine which VLC links and VLC nodes are to be used in communications across the VLC network.

Another aspect of the invention relates to a method for use in a Visible Light Communications, VLC, network comprising at least one VLC link, at least two VLC nodes adapted to communicate through the at least one VLC link and wherein each of the VLC nodes contain physically unclonable functions, PUFs, that are constructed using an optical Unclonable Signature Device, USD, wherein each of the VLC nodes comprise at least one VLC transceiver comprising one transmitting part and one receiving part. The method comprises the steps of setting up the VLC network using a VLC network setup, challenging from one VLC Node the at least one other VLC node through their respective VLC links and receiving a response for each challenge, initializing a challenge response database, CRP database, in each of the VLC nodes using the received responses of each challenge, initializing a trust database indicating all of the VLC links and VLC nodes that are trusted, and transferring information from each VLC node to the VLC network using a communication algorithm, a routing algorithm and the trust database.

The method may further comprise the steps of applying a hashing function to the light signature response of a USD PUF, calculating the response by combining the light intensity signature of the USD PUF with the hashing function, and setting a challenge response pair comprising a challenge and the observed response.

The invention provides means both to authenticate a VLC node and to detect tampering within a VLC communication link. The invention is based on the use of a diffractive filter array as a physically unclonable function. Different challenges can be issued to a USD PUF, here implemented by a DFA, by sending a value to set the internal parameters of the USD, e.g. to vary the distance d between the DFA and the image sensor, for example by means of a piezoelectric transducer, the wavelength λ, the location of the signal on the diffractive filter array, or the angle between the diffractive filter array and the sensor. The response is computed by combining the light intensity distribution with a suitable hashing function, so as to decorralate the response from nearby values of d and/or λ.

This concept is extended to authentication and tamper detection throughout a VLC communication network, by a process of consensus-building amongst the different nodes within the network.

### Detailed description of the invention

Hereinafter, an exemplary embodiment of the present invention will be described in detail. Meanwhile, the configuration of a system or method of the system, which will be described below, is merely given to describe the embodiment of the present invention, without being intended to limit the scope of the present invention.

The invention is a VLC network, which comprises a number of VLC nodes that communicate with each other across VLC links. The VLC nodes contain physically unclonable functions that are constructed using an optical USD, for example a DFA.

A VLC node can challenge a second VLC node with which it is in direct communication, and can receive a response in reply. By inspecting the response, the original VLC node can estimate the likelihood of tampering within the second VLC node or the intervening VLC link. The information is exchanged across the network, and a consensus decision is reached about which VLC nodes and VLC links are to be trusted. The information is used in communication and routing across the network.

VLC nodes comprise at least one or more VLC transceivers comprising one transmitting part and one receiving part. One of the VLC nodes, further referred to as a first VLC node, is configured to challenge a different VLC, further referred to as second VLC node, both being in direct communication, and receiver a response in reply therefor. VLC links, each being a communication link across which two VLC transceivers communicate by means of a modulated optical carrier.

The first VLC node is configured to inspect the response and estimate the likelihood of tampering within the second VLC node or the intervening VLC link, and to exchange said estimation information across the network to consensually determine the VLC nodes and VLC links that are to be trusted. The information is used in communication and routing across the network.

Unclonable Signature Devices, for example implemented by Diffractive Filter Arrays (the "USDs"), in this exemplary embodiment each comprise a diffractive part and a sensor part, separated by a distance *d.* Optionally, the distance *d* might be adjustable. Each USD is associated with a VLC transceiver.

Further, in the VLC network of a preferred embodiment, physically unclonable functions are implemented using USDs (the "USD PUFs"), by means of variations in the microstructure of components of the individual USDs. These variations are introduced by means of either or both of the following: variations that are deliberately introduced during manufacturing and/or variations that arise at random due to manufacturing tolerances.

The VLC network of a preferred embodiment, further comprising means for measuring the likelihood of tampering within either or both of one VLC link and the corresponding DFA PUF, which is determined by the VLC node that issued the challenge. An example is the probability of tampering within either or both of the VLC link and the DFA PUF.

A challenge may be comprised by a message sent by a VLC transmitter across a VLC link to a USD PUF, which defines one or both of the following: the wavelength λ, by means of the wavelength(s) or colour of the optical carrier and/or the internal variable parameter setting of the USD PUF, the information being sent within the message.

The challenge is sent to the VLC node, for example the challenge may be transmitted as the initial part of a message, for example by using a code that is only frequency modulated, so it does not have a spatial variation across the image sensor. Such a message could, for example, provide the distance *d* to which the DFA - sensor spacing should be set.

The VLC network may further comprise a challenge response database, CRP database, comprising a set of challenges, a set of expected responses, and an indication of the expected variability amongst the responses if the same challenge is issued two or more times.

The VLC network may further comprise a node level tampering algorithm, which is configured to take at least one CRP pair and the contents of the CRP database, and to determine the node level tampering likelihood, wherein the node level tampering algorithm has means to differentiate between natural variations in communication links and variations most likely to be due to tampering.

The VLC network may further comprise an integrity protection algorithm configured to check that the information has not been modified on the pathway between one VLC node and another VLC node.

The VLC network may further comprise means for measuring the likelihood of tampering within each individual VLC node and its associated VLC links, which is determined by a consensus across the VLC network, the Network Level Tampering Likelihood. An example is the probability of tampering within each individual VLC node or any of its associated VLC links.

The VLC network may further comprise a trust database containing a list of which VLC links and VLC nodes are trusted, a trust database algorithm which takes the Network Level Tampering Likelihood and updates the trust database, a communicating and routing algorithm that takes the contents of the trust database and determines which VLC links and VLC nodes are to be used in communications across the VLC network.

Hereinafter, an exemplary method for carrying out the present invention is described in detail. Again, the VLC network comprises at least one VLC link, at least two VLC nodes adapted to communicate through the at least one VLC link and each of the VLC nodes contain physically unclonable functions, PUFs, that are constructed using an optical Unclonable Signature Device, USD. Each of the VLC nodes comprise at least one VLC transceiver comprising one transmitting part and one receiving part.

The method comprises the step of first setting up the VLC network using a VLC network setup. In this process, the transceivers of the VLC network are individually authenticated and then organized into the network by placing them in their desired locations, interfacing them to their associated local networks and directing them to communicate with each other and finally checking that communication between transceivers is established. At the end of this process a first CRP pair or set of such pairs to determine variability between connected transceiver are collected and used to instantiate the CRP database.

Afterwards, each VLC node sends a number of challenges to the other VLC nodes with which it is directly connected by means of VLC links, and receives a number of responses in reply. Then, said responses are used by each VLC node to initialize its CRP database.

After that the trust database is initialized to indicate that all of the VLC links and VLC nodes are trusted. Then, using the communication and routing algorithm and the trust database, each VLC node transfers information across the VLC network.

The method described above optionally comprises the steps of applying a hashing function to the light signature response of a USD PUF, calculating the response by combining the light intensity signature of the USD PUF with the hashing function, setting a challenge response pair comprising a challenge and the observed response.

The response comprises a message that is returned to the transmitting device that issued the challenge. The response is calculated by combining the light intensity signature of the USD PUF with the hashing function. Said response might depend upon the following variables: the angle of the incoming optical signal; the precise optical structure due to the manufacturing variations of the USD PUF; the wavelength λ; the variable internal setting parameter of the USD, for example the diffractive element to sensor distance in a DFA.

The response to each challenge is found during a characterization phase during the setup of the system and stored within the VLC node issuing the challenge.

### Example method

A detailed example method is described herein below.
1. A first VLC node sends a Challenge to a second VLC node, and receives a response in reply.
2. Using the response, the CRP Database, and the Node Level Tampering Algorithm, the first VLC Node computes the Node Level Tampering Likelihood in respect of the second VLC Node.
3. The first VLC Node sends the new Node Level Tampering Likelihood to the other VLC Nodes within the VLC Network. The information is secured by means of the Integrity Protection Algorithm, to guard against the possibility that the information may be routed by means of intervening VLC Links and VLC Nodes whose security has been compromised.
4. Using the Trust Database Algorithm each VLC Node updates its copy of the Trust Database.
5. Using the Communication and Routing Algorithm and the Trust Database, each VLC Node continues to transfer information across the VLC Network.

The invention is applicable to VLC networks, in which there is a wish to authenticate the individual VLC nodes, or to detect tampering with a VLC node or a VLC link.

While the invention has been illustrated and described in detail in the drawings and foregoing description, such illustration and description are to be considered illustrative or exemplary and not restrictive. It will be understood that changes and modifications may be made by those of ordinary skill within the scope of the following claims. In particular, the present invention covers further embodiments with any combination of features from different embodiments described above and below.

Furthermore, in the claims the word "comprising" does not exclude other elements or steps, and the indefinite article "a" or "an" does not exclude a plurality. A single unit may fulfil the functions of several features recited in the claims. The terms "essentially", "about", "approximately" and the like in connection with an attribute or a value particularly also define exactly the attribute or exactly the value, respectively. Any reference signs in the claims should not be construed as limiting the scope.

## Claims

1. A Visible Light Communications, VLC, network comprising:
at least one VLC link,
at least two VLC nodes adapted to communicate through the at least one VLC link,
wherein each of the VLC nodes contain physically unclonable functions, PUFs, that are constructed using an optical Unclonable Signature Device, USD,
wherein each of the VLC nodes comprise at least one VLC transceiver comprising one transmitting part and one receiving part,
wherein one of the VLC nodes, further referred as first VLC node, is configured to challenge a different VLC node, further referred as second VLC node, both being in direct communication, and receive a response in reply therefor,
wherein the first VLC node is configured to inspect the response and estimate the likelihood of tampering within the second VLC node or the intervening VLC link, and to exchange said estimation information across the network to consensually determine the VLC nodes and VLC links that are to be trusted, and
wherein the estimation information is used in communication and routing across the network.

2. The VLC network of claim 1, wherein each of the USDs is associated with one of the VLC transceivers.

3. The VLC network of any one of claims 1 to 2, wherein the PUFs are implemented by the USDs by means of variations in the microstructure of components of the individual USDs, and wherein said variations are introduced by means of either or both of variations deliberately introduced during manufacturing or random variations due to manufacturing tolerances.

4. The VLC network of claim 3, further comprising means for measuring the likelihood of tampering within either or both of one VLC link and the corresponding DFA PUF, which is determined by the VLC node that issued the challenge.

5. The VLC network of claims 3 or 4, wherein the optical USD is a Diffractive Filter Array, DFA, each DFA comprising a diffractive part and a sensor part separated by an adjustable distance (d).

6. The VLC network of claim 5, wherein the challenge comprises a message sent by a VLC transmitter across a VLC link to a USD PUF is configured to define one or both of
a wavelength λ, by means of the wavelength/s or color of the optical carrier, and/or
the internal variable parameter setting of the USD PUF, the information being sent within the message.

7. The VLC network of claim 6, further comprising
a challenge response database, CRP database, comprising a set of challenges, a set of expected responses, and an indication of the expected variability amongst the responses.

8. The VLC network of claims 6 and 7, further comprising a node level tampering algorithm, which is configured to take at least one CRP pair and the contents of the CRP database, and to determine the node level tampering likelihood, wherein the node level tampering algorithm has means to differentiate between natural variations in communication links and variations most likely to be due to tampering.

9. The VLC network of any of claims 6 to 8, further comprising an integrity protection algorithm configured to check that the information has not been modified on the pathway between one VLC node and another VLC node.

10. The VLC network of any of claims 6 to 9, further comprising means for measuring the likelihood of tampering within each individual VLC node and its associated VLC links.

11. The VLC network of any of claims 6 to 10, further comprising
a trust database containing a list of which VLC links and VLC nodes are trusted,
a trust database algorithm configured to take the Network Level Tampering Likelihood and update the trust database,
a communicating and routing algorithm configured to take the contents of the trust database and to determine which VLC links and VLC nodes are to be used in communications across the VLC network.

12. A method for use in a Visible Light Communications, VLC, network comprising at least one VLC link, at least two VLC nodes adapted to communicate through the at least one VLC link and wherein each of the VLC nodes contain physically unclonable functions, PUFs, that are constructed using an optical Unclonable Signature Device, USD, wherein each of the VLC nodes comprise at least one VLC transceiver comprising one transmitting part and one receiving part, the method comprising the steps of
setting up the VLC network using a VLC network setup,
challenging from one VLC Node the at least one other VLC node through their respective VLC links and receiving a response for each challenge,
initializing a challenge response database, CRP database, in each of the VLC nodes using the received responses of each challenge,
initializing a trust database indicating all of the VLC links and VLC nodes that are trusted, and
transferring information from each VLC node to the VLC network using a communication algorithm, a routing algorithm and the trust database.

13. The method of claims 12, further comprising the steps of
applying a hashing function to the light signature response of a USD PUF,
calculating the response by combining the light intensity signature of the USD PUF with the hashing function, and
setting a challenge response pair comprising a challenge and the observed response.
